# EUROPÄISCHE PATENTSCHRIFT

(11) **EP 4 061 657 B1**
(45) Veröffentlichungstag und Bekanntmachung des Hinweises auf die Patenterteilung: **19.02.2025**
(21) Anmeldenummer: 20824994.6
(22) Anmeldetag: 18.11.2020
(51) Int. Cl.: B60J 10/16, C08L 23/20, B65D 41/00, B65D 53/06, B65D 43/02, B65D 51/14, B65D 53/02

(54) **GEFAESSVERSCHLUSS MIT DICHTUNGSELEMENT**
CONTAINER CLOSURE WITH A SEALING ELEMENT
DISPOSITIF DE FERMETURE DE RÉCIPIENT DOTÉ D'UN ÉLÉMENT D'ÉTANCHÉITÉ

(30) Priorität: 18.11.2019 DE 102019131078
(43) Veröffentlichungstag der Anmeldung: 28.09.2022
(73) Patentinhaber: Silgan Holdings Inc., Stamford, CT 06901 (US)
(72) Erfinder: KINTSCHER, Juergen, 30900 Wedemark (DE); MANIERA, Andreas, 31535 Neustadt (DE)
(74) Vertreter: Ter Meer Steinmeister & Partner
(86) Internationale Anmeldenummer: PCT/IB2020/060850
(87) Internationale Veröffentlichungsnummer: WO 2021/099951

(56) Entgegenhaltungen:
- WO-A1-2016/188982
- WO-A2-2006/128646
- US-A1- 2005 148 720
- US-A1- 2006 189 744

## Beschreibung

Die Erfindung betrifft einen Gefäßverschluss, beispielsweise einen Schraubverschluss, mit einem Dichtungselement. Auch betrifft die Erfindung ein Gefäß, das mit einem solchen Gefäßverschluss verschlossen ist oder in einem Verfahren befüllt und verschlossen wird, um ein verschlossenes und befülltes Gefäß herzustellen.

PVC-freie Dichtungselemente für Gefäßverschlüsse des Standes der Technik enthalten oft Weißöl als Komponente, die bei Umgebungsbedingungen flüssig ist. Weißöl wird in den Zusammensetzungen der Dichtungselemente eingesetzt, um die Härte der Dichtungselemente zu reduzieren, die Verarbeitbarkeit der Zusammensetzungen zu verbessern und die Gesamtkosten des Dichtungselements zu reduzieren.

Enthält das Dichtungselement eines Gefäßverschlusses Weißöl und verschließt der Gefäßverschluss ein mit einem Lebensmittel befülltes Gefäß, ist die Gesamtmigration in das Lebensmittel erhöht. Insbesondere ist die Gesamtmigration erheblich erhöht, wenn das Lebensmittel einen hohen Fett- oder Ölgehalt besitzt.

US 2005/148720 A1 betrifft strahlungsbeständige weichgemachte Polyolefin-Zusammensetzungen, die ein Polyolefin und einen nicht-funktionalisierten Kohlenwasserstoff-Weichmacher enthalten.

US 2006/189744 A1 betrifft Artikel aus weichgemachten thermoplastischen Polyolefin-Zusammensetzungen, die ein thermoplastisches Polyolefin, ein Nukleierungsmittel und einen nicht funktionalisierten Kohlenwasserstoff-Weichmacher enthalten.

WO 2006/128646 A2 betrifft elastomere Strukturen mit einem ersten und einem zweiten Element, die jeweils aus einem anderen elastomeren Material bestehen, wobei das erste Element einen Modifikator enthält. Bei der geformten Struktur kann es sich z. B. um eine Kfz-Wetterdichtung handeln.

WO 2016/188982 A1 betrifft eine Dichtung für Verschlüsse, umfassend eine Polyolefinzusammensetzung (I), enthaltend A) 25 bis 62 Gew.-% eines Copolymers von Buten-1 mit Ethylen mit einem Gehalt an copolymerisiertem Ethylen von bis zu 18 Mol-% und keinem Schmelzpeak, der bei der DSC beim zweiten Heizscan nachweisbar ist; B) 38 bis 75 Gew.-% (i) eines Propylenhomopolymers oder (ii) eines Propylencopolymers oder (iii) eines Gemischs aus zwei oder mehr von (i) und (ii) mit einer Schmelztemperatur Tm, gemessen durch DSC beim zweiten Erhitzungsscan, von 130°C bis 165°C; wobei die Mengen von A) und B) auf das Gesamtgewicht von A) + B) bezogen sind.

Eine Aufgabe der Erfindung liegt darin, eine Polymerzusammensetzung bereitzustellen, die als Dichtungselement in einem Gefäßverschluss eingesetzt werden kann, die verhältnismäßig geringe Migrationswerte aufweist und einen Einsatz des Gefäßverschlusses bei niedrigen Temperaturen ermöglicht. Eine weitere Aufgabe liegt in der Verbesserung der Verarbeitbarkeit der Polymerzusammensetzung zu einem Dichtungselement.

Gelöst wird die Aufgabe durch die Gegenstände der unabhängigen Ansprüche. Bevorzugte Ausführungsformen sind in den abhängigen Ansprüchen definiert.

Der Gefäßverschluss umfasst ein Dichtungselement. Das Dichtungselement umfasst eine Polymerzusammensetzung oder besteht aus der Polymerzusammensetzung und die Polymerzusammensetzung umfasst ein Polyalphaolefin und ein zweites Polyolefin. Das Polyalphaolefin (erstes Polyolefin) weist eine kinematische Viskosität von zumindest 4 cSt bei einer Temperatur von 100°C auf. Die kinematische Viskosität kann bestimmt werden nach ASTM D 445 oder ISO 3104, bevorzugt nach ISO 3104. Zusätzlich oder alternativ weist das Polyalphaolefin einen Tropfpunkt von höchstens -10 °C auf. Der Tropfpunkt kann bestimmt werden nach ASTM 5950. Das zweite Polyolefin ist mit einem Anteil von bis zu 95 Gew-% in der Polymerzusammensetzung enthalten.

Das zweite Polyolefin kann zwischen 5 Gew.-% und 95 Gew.-%, bevorzugt zwischen 15 Gew.-% und 85 Gew.-%, bevorzugter zwischen 25 Gew.-% und 75 Gew.-%, noch bevorzugter zwischen 35 Gew.-% und 65 Gew.-%, in der Polymerzusammensetzung enthalten sein.

Der Gefäßverschluss kann einen Träger aus Metall, Kunststoff oder Metall und Kunststoff umfassen, wobei ein Gefäßverschluss aus Metall und Kunststoff auch Composite-Verschluss genannt wird. Umfasst der Träger Metall oder ist der Träger aus Metall, kann zumindest eine Seite des Trägers mit einem Haftlack beschichtet sein, um eine Verbindung des Dichtelements mit dem Träger zu verbessern. Das Dichtungselement kann außerhalb des Trägers geformt werden und an den Träger z.B. durch Druck und/oder Temperatur zur Haftung gebracht werden. Das Dichtungselement kann auch auf dem Träger geformt werden, indem eine fließfähige Polymerzusammensetzung auf den Träger aufgebracht wird und diese in Form gebracht wird.

Bei Gefäßverschlüssen, die auf die Öffnung eines Gefäßes durch eine Schraubbewegung aufgebracht werden, z.B. Nockendrehverschlüsse, ist das Dichtungselement größtenteils in dem flächigen Teil des Trägers angeordnet, sodass ein oberer Bereich einer Gefäßmündung, durch den die Gefäßöffnung definiert ist, das Dichtungselement kontaktiert, wenn der Gefäßverschluss an dem Gefäß angebracht ist und die Öffnung des Gefäßes verschließt.

Das Dichtungselement kann im Wesentlichen scheibenförmig oder im Wesentlichen ringförmig ausgebildet sein.

Speziell bei Press-on Twist-off-Gefäßverschlüssen (PT-Gefäßverschlüssen) befindet sich ein erheblicher Anteil des Dichtungselements in dem Schürzenbereich des Trägers. Bei Composite-PT-Gefäßverschlüssen (bspw. der unter dem Markennamen Band-Guard erhältliche Gefäßverschluss) umfasst der Gefäßverschluss ein Kunststoffgewinde, das mit einem Gegengewinde eines Gefäßes zusammenwirkt.

Ein PT-Gefäßverschluss wird beim Verschließen eines Gefäßes auf die Gefäßmündung aufgepresst (Press-on), während sich das Dichtungselement in einem erwärmten Zustand befindet und ausreichend fließfähig ist. Ein Außengewinde im Mündungsbereich des Gefäßes verursacht ein Innengewinde (als Negativ des Außengewindes) in dem Dichtungselementbereich auf der Schürze des Gefäßverschlussträgers. Das Innengewinde bleibt nach Erhärten des Dichtungselements bestehen. Der PT-Gefäßverschluss wird durch eine Drehbewegung (Twist-off) von dem Gefäß entfernt.

Das Polyalphaolefin des Dichtungselements des Gefäßverschlusses kann bei 23 °C und 1 bar in flüssiger Form (in dem Aggregatszustand flüssig) vorliegen.

Die kinematische Viskosität des Polyalphaolefins kann bei einer Temperatur von 100 °C zwischen 4 cSt und 1500 cSt liegen. Speziell liegt die kinematische Viskosität des Polyalphaolefins bei einer Temperatur von 100 °C zwischen 50 cSt und 1000 cSt oder zwischen 120 cSt und 1000 cSt. Am meisten bevorzugt liegt die kinematische Viskosität des Polyalphaolefins bei einer Temperatur von 100°C zwischen 250 cSt und 1000 cSt. Auch kann die kinematische Viskosität des Polyalphaolefins bei 100 °C bei zumindest 250 cSt liegen. Die kinematische Viskosität des Polyalphaolefins kann bei einer Temperatur von 100 °C bei höchstens 1500 cSt liegen.

Die kinematische Viskosität des Polyalphaolefins bei einer Temperatur von 100 °C kann auch zwischen 2 cSt und 10 cSt, zwischen 55 cSt und 75 cSt, zwischen 140 cSt und 160 cSt, zwischen 280 cSt und 320 cSt oder zwischen 900 cSt und 1100 cSt liegen.

Der Tropfpunkt (bestimmt nach ASTM 5950) kann bei höchstens -20 °C liegen. Spezifisch liegt der Tropfpunkt des Polyalphaolefins bei höchstens -30 °C.

Die Dichte des Polyalphaolefins der Polymerzusammensetzung kann bis zu 0,860 g cm⁻³ betragen. Speziell liegt die Dichte des Polyalphaolefins zwischen 0,825 g cm⁻³ und 0,855 g cm⁻³. Auch kann die Dichte des Polyalphaolefins zwischen 0,840 g cm⁻³ und 0,855 g cm⁻³ liegen.

Das mittlere Molekulargewicht M_{w} des Polyalphaolefins kann mindestens 440 Da betragen. Speziell liegt das mittlere Molekulargewicht M_{w} des Polyalphaolefins zwischen 440 Da und 12000 Da oder zwischen 1000 Da und 10000 Da. Am meisten bevorzugt liegt das mittlere Molekulargewicht M_{w} des Polyalphaolefins zwischen 3000 Da und 10000 Da.

Das Polyalphaolefin kann ein Metallocen-Polyalphaolefin sein. Das Polyalphaolefin kann durch die Anwendung eines Metallocen-Katalysators hergestellt worden sein.

Das Polyalphaolefin kann ein Ziegler-Natta-Polyalphaolefin sein. Das Polyalphaolefin kann durch die Anwendung eines Ziegler-Natta-Katalysators hergestellt worden sein.

Das Polyalphaolefin kann ein Homopolymer oder ein Copolymer sein.

Spezifisch ist das Polyalphaolefin ein Homopolymer eines C₃ bis C₂₂ alpha-Olefins. Zur Herstellung des Polyalphaolefins als Homopolymer werden also alpha-Olefine der Länge C₃ bis C₂₂ als Monomere eingesetzt. Bevorzugt werden für das Polyalphaolefin als Homopolymer C₆ bis C₁₄ alpha-Olefine oder C₈ bis C₁₀ alpha-Olefine als Monomere eingesetzt.

Das Polyalphaolefin kann ein alpha-Octen-Homopolymer oder ein alpha-Decen-Homopolymer sein, bevorzugt ein alpha-Decen-Homopolymer.

Als Copolymer ist das Polyalphaolefin aus zumindest zwei verschiedenartigen alpha-Olefinen der Länge C₃ bis C₂₂ als Comonomere aufgebaut. Spezifisch kommen zwei verschiedenartige Alphaolefine der Länge C₆ bis C₁₄ oder C₈ bis C₁₀ als Comonomere zum Einsatz.

Das Polyalphaolefin kann ein Bipolymer sein.

Das Polyalphaolefin kann ein synthetisches Fluid (bei 23 °C und 1 bar) sein, insbesondere ist das Polyalphaolefin ein vollständig synthetisches Fluid (bei 23 °C und 1 bar).

Das Polyalphaolefin kann hydriert sein, insbesondere ist das Polyalphaolefin vollständig hydriert.

Das Polyalphaolefin kann eine Mischung verschiedenartiger Polyalphaolefine sein. Beispielsweise kann das Polyalphaolefin eine Mischung von zumindest zwei Polyalphaolefinen sein, die sich in ihrer kinematischen Viskosität und/oder in ihren (Co-)Monomeren unterscheiden. Hierzu können zumindest zwei der hierin offenbarten Polyalphaolefine als Mischung vorliegen.

Das Polyalphaolefin kann mit einem Anteil von bis zu 65 Gew.-% in der Polymerzusammensetzung enthalten sein. Allgemein beziehen sich Gew.-%-Angaben auf die Gesamtmasse der Polymerzusammensetzungen. Insbesondere liegt der Anteil des Polyalphaolefins in der Polymerzusammensetzung zwischen 3 Gew.-% und 65 Gew.-% oder zwischen 3 Gew.-% und 50 Gew.-%. Noch spezifischer kann der Anteil des Polyalphaolefins in der Polymerzusammensetzung zwischen 3 Gew.-% und 30 Gew.-% oder zwischen 5 Gew.-% und 30 Gew.-% liegen.

Der Anteil des Polyalphaolefins in der Polymerzusammensetzung kann zwischen 3 Gew.-% und 7 Gew.-%, zwischen 7 Gew.-% und 12 Gew.-%, zwischen 14 Gew.-% und 20 Gew.-%, zwischen 17 Gew.-% und 23 Gew.-%, zwischen 27 Gew.-% und 33 Gew.-% oder zwischen 35 Gew.-% und 45 Gew.-% liegen.

Das zweite Polyolefin in der Polymerzusammensetzung ist verschiedenartig zu dem Polyalphaolefin. Beispielsweise können sich verschiedenartige Polymere durch ihren Aufbau (z.B. (Co)Monomere der Polymere) oder durch zumindest eine Eigenschaft unterscheiden (z.B. Härte, Dichte).

Das zweite Polyolefin kann eine Shore A Härte bei 23 °C (DIN ISO 7619-1; Haltezeit 15 s) von höchstens 90 aufweisen. Insbesondere liegt die Shore A Härte bei 23 °C zwischen 30 und 90.

Das zweite Polyolefin kann ein Plastomer oder ein Elastomer sein.

Spezifisch ist das zweite Polyolefin ein Polyolefin-Elastomer, das eine Dichte (DIN EN ISO 1183-1) zwischen 0,860 g cm⁻³ und 0,889 g cm⁻³ aufweist.

Das zweite Polyolefin kann auch ein Polyolefin-Plastomer sein, wobei die Dichte zwischen 0,890 g cm⁻³ und 0,910 g cm⁻³ liegt.

Das zweite Polyolefin kann ein Elastomer mit einer Dichte von weniger als 0,860 g cm⁻³ sein. Insbesondere weist das Elastomer eine Dichte zwischen 0,780 g cm⁻³ und 0,859 g cm⁻³ oder zwischen 0,800 g cm⁻³ und 0,859 g cm⁻³ auf.

Das zweite Polyolefin kann ein Plastomer mit einer Dichte von höchstens 0,910 g cm⁻³ sein. Insbesondere weist das Plastomer eine Dichte zwischen 0,860 g cm⁻³ und 0,910 g cm⁻³ auf.

Das zweite Polyolefin kann ein Copolymer, insbesondere ein random Copolymer, sein. Speziell ist das zweite Polyolefin ein Copolymer das alpha-Buten und ein C₂, C₃ oder C₅ bis C₁₆ (alpha-)Olefin als Comonomer umfasst.

Der Anteil des alpha-Butens in dem Copolymer kann mehr als 50 mol-% betragen. Speziell liegt der Anteil des alpha-Butens in dem Copolymer bei mindestens 60 mol-% oder bei mindestens 80 mol-%.

Das zweite Polyolefin kann ein Copolymer, insbesondere ein random Copolymer, aus Propen und einem C₂, C₄ oder C₅ bis C₁₆ (alpha-)Olefin sein.

Der Anteil von Propen in dem Copolymer kann bei mehr als 50 mol-% liegen. Insbesondere kann der Anteil von Propen in dem Copolymer bei mehr als 60 mol-% oder mehr als 70 mol-% liegen.

Das zweite Polyolefin kann ein Copolymer, insbesondere ein random oder block Copolymer, sein, das Ethen und ein C₅ bis C₁₆ (alpha-)Olefin als Comonomer umfasst. Speziell ist ein Comonomer des Copolymers Ethen und ein weiteres Comonomer des Copolymers ist ein C₅, C₇, C₉ oder C₁₀ bis C₁₆ alpha-Olefin.

Der Anteil von Ethen in dem Copolymer kann bei mehr als 50 mol-% liegen. Spezifisch liegt der Anteil von Ethen in dem Copolymer bei zumindest 60 mol-% oder bei zumindest 70 mol-%.

Allgemein kann das zweite Polyolefin ein Bipolymer sein.

Besonders bevorzugt ist das zweite Polyolefin ein alpha-Buten-Ethen-Copolymer, wobei alpha-Buten zu mehr als 50 mol-% in dem Copolymer als insbesondere Bipolymer vorhanden ist.

Ebenso bevorzugt ist das zweite Polyolefin ein alpha-Buten-Propen-Copolymer (Bipolymer) mit einem molaren Anteil von alpha-Buten in dem Copolymer von mehr als 50 mol-%.

Das zweite Polyolefin kann in der Polymerzusammensetzung einen Gewichtsanteil von höchstens 80 Gew.-% aufweisen. Spezifisch liegt der Anteil des zweiten Polyolefins in der Polymerzusammensetzung bei höchstens 70 Gew.-%.

In der Polymerzusammensetzung kann das zweite Polyolefin auch einen Anteil zwischen 5 Gew.-% und 95 Gew.-% aufweisen. Spezieller liegt der Anteil des zweiten Polyolefin in der Polymerzusammensetzung zwischen 20 Gew.-% und 95 Gew.-% oder zwischen 50 Gew.-% und 95 Gew.-%.

Das zweite Polyolefin kann mit einem Anteil zwischen 55 Gew.-% und 70 Gew.-% in der Polymerzusammensetzung vorhanden sein. Auch kann das zweite Polyolefin zwischen 83 Gew.-% und 93 Gew.-% in der Polymerzusammensetzung vorhanden sein.

Die Polymerzusammensetzung kann ein drittes und/oder viertes Polymer (zwei Polymere) umfassen, wobei das dritte und das vierte Polymer verschiedenartig zu dem Polyalphaolefin und dem zweiten Polyolefin sind und das dritte Polymer verschiedenartig zu dem vierten Polymer ist. Das Polyalphaolefin, das zweite Polyolefin, das dritte Polymer und das vierte Polymer sind also jeweils verschiedenartige Polymere.

Das dritte und/oder vierte Polymer kann ein Polyolefin sein. Das dritte und/oder vierte Polymer kann eine Shore-D-Härte (DIN ISO 7619-1; Haltezeit 15 s) bei 23 °C von höchstens 60 aufweisen. Speziell liegt die Shore-D-Härte des dritten und/oder vierten Polymers zwischen 20 und 60.

Das dritte und/oder vierte Polymer kann ein Homopolymer sein. Speziell ist das dritte und/oder vierte Polymer als Homopolymer aufgebaut aus einem C₂ bis C₁₂ alpha-Olefin. Das dritte und/oder vierte Polymer als Homopolymer kann als Monomer ein C₂ bis C₈ alpha-Olefin oder ein C₂ bis C₆ alpha-Olefin umfassen.

Es ist besonders bevorzugt, dass das dritte und/oder vierte Polymer ein Polyethylen-Homopolymer (beispielsweise LDPE), ein Polypropylen-Homopolymer oder ein alpha-Buten-Homopolymer ist.

Das Polypropylen-Homopolymer kann ein syndiotaktisches Polypropylen-Homopolymer sein. Insbesondere kann der Grad der Syndiotaktizität (syndiotaktischer Index) des Polypropylen-Homopolymers bei zumindest 75 % liegen. Der Grad der Syndiotaktizität (syndiotaktischer Index) kann nach den in US 5,476,914 B beschriebenen Methoden durch NMR, IR oder GPC bestimmt werden, bevorzugt durch NMR.

Das dritte und/oder vierte Polymer kann ein Copolymer sein.

Bevorzugt ist das dritte und/oder vierte Polymer ein Polypropylen-Copolymer. Das Polypropylen-Copolymer kann ein syndiotaktisches Polypropylen-Copolymer sein. Das Polypropylen-Copolymer kann einen Propylen-Anteil von zumindest 60 mol-%, insbesondere zumindest 75 mol-%, bevorzugter zumindest 90 mol-%, noch bevorzugter zumindest 95 mol-%, am meisten bevorzugt zumindest 98 mol-%, aufweisen.

Das Polypropylen-Copolymer umfasst bevorzugt die Monomere Ethylen und Propylen. Ethylen kann mit einem Anteil von maximal 2 mol-% in dem Propylen-Copolymer vertreten sein.

Der Grad der Syndiotaktizität des Polypropylen-Copolymers kann bei zumindest 75 % liegen.

Das dritte und/oder vierte Polymer als Copolymer kann zumindest ein oder zumindest zwei (unterschiedliche) C₂ bis C₁₂ alpha-Olefine als Comonomere aufweisen. Spezifisch ist das dritte und/oder vierte Polymer als Copolymer aus zumindest einem oder zumindest zwei (unterschiedlichen) C₂ bis C₈ alpha-Olefinen oder C₂ bis C₆ alpha-Olefinen aufgebaut.

Das dritte und/oder vierte Polymer kann ein Bipolymer sein.

Am meisten bevorzugt ist das dritte und/oder vierte Polymer ein Propen-Ethen-Copolymer (Bipolymer), wobei insbesondere der Anteil an Propen höher als 50 mol-% ist.

Auch kann das dritte und/oder vierte Polymer als Copolymer ein Propen-alpha-Hexen-Copolymer (Bipolymer) sein, wobei der Anteil an Propen in dem Copolymer mehr als 50 mol-% beträgt.

Das dritte und/oder vierte Polymer kann jeweils zu höchstens 35 Gew.-% in der Polymerzusammensetzung enthalten sein. Das dritte und/oder vierte Polymer kann jeweils zu zwischen 5 Gew.-% und 35 Gew.-% oder zwischen 5 Gew.-% und 27 Gew.-% in der Polymerzusammensetzung enthalten sein. Spezifisch liegt der Anteil des dritten und/oder vierten Polymers jeweils zwischen 5 Gew.-% und 18 Gew.-% oder zwischen 11 Gew.-% und 18 Gew.-%.

Der MFI (mass flow index) der Polymerzusammensetzung kann kleiner als 30 g/10 min, speziell kleiner als 10 g/10 min, besonders bevorzugt kleiner als 5 g/10 min sein, wobei der MFI nach DIN EN ISO 1133 bei 190 °C und 2,16 kg bestimmt ist.

Die Polymerzusammensetzung kann eine Polyolefinzusammensetzung sein, so dass die Polymerzusammensetzung als polymere Komponenten ausschließlich Polyolefine umfasst, wobei Additive als nicht-Polyolefine in der Polymerzusammensetzung enthalten sein können.

Die Polymerzusammensetzung kann frei von PVC (Polyvinylchlorid) sein.

In einer Ausführungsform kann die Polymerzusammensetzung frei von einem Copolymer sein, das Styrol als Comonomer aufweist.

Die Polymerzusammensetzung kann maximal 10 Gew.-% eines mineralischen Öls, z.B. Weißöl, enthalten, bevorzugt enthält die Polymerzusammensetzung maximal 5 Gew.-% eines mineralischen Öls, besonders bevorzugt ist die Polymerzusammensetzung frei von einem mineralischen Öl.

In der Polymerzusammensetzung können bis zu 15 Gew.-% Additive enthalten sein. Insbesondere sind in der Polymerzusammensetzung bis zu 8 Gew.-% Additive enthalten, besonders bevorzugt maximal 6 Gew.-% Additive, am meisten bevorzugt maximal 5 Gew.-% Additive.

Additive in der Polymerzusammensetzung können ausgewählt sein aus der Gruppe bestehend aus: Pigmente, Nukleierungsmittel, Aufheller, Stabilisatoren, Tenside, Gleitmittel, Antioxidantien und Kombinationen hiervon.

Es ist bevorzugt, dass die Polymerzusammensetzung keinen Sauerstoff-Scavenger enthält.

Die Polymerzusammensetzung kann einen statischen Reibungskoeffizienten (bestimmt nach DIN EN ISO 8295 von maximal 0,50 aufweisen, insbesondere einen statischen Reibungskoeffizienten von maximal 0,40 aufweisen. Speziell liegt der statische Reibungskoeffizient der Polymerzusammensetzung zwischen 0,10 und 0,40 oder zwischen 0,15 und 0,40.

Die Sauerstoffdurchlässigkeitsrate der Polymerzusammensetzung kann höchstens 1300 cm³ m⁻² d⁻¹ bar⁻¹, bevorzugt höchstens 900 cm³ m⁻² d⁻¹ bar⁻¹, mehr bevorzugt höchstens 750 cm³ m⁻² d⁻¹ bar⁻¹ betragen. Besonders bevorzugt liegt die Sauerstoffdurchlässigkeitsrate der Polymerzusammensetzung zwischen 300 cm³ m⁻² d⁻¹ bar⁻¹ und 1300 cm³ m⁻² d⁻¹ bar⁻¹ oder zwischen 300 cm³ m⁻² d⁻¹ bar⁻¹ und 900 cm³ m⁻² d⁻¹ bar⁻¹.

Die Sauerstoffdurchlässigkeitsrate kann nach DIN 53380 gemessen werden. Die Rate der Sauerstoffdurchlässigkeit der Polymerzusammensetzung in dem Gefäßverschluss hat einen Einfluss auf die mögliche Lagerdauer eines mit dem Gefäßverschluss verschlossenen Gefäßes, das mit einem Lebensmittel befüllt ist.

Die Gesamtmigration der Polymerzusammensetzung kann maximal 5,50 mg cm⁻², bevorzugt maximal 3,50 mg cm⁻², besonders bevorzugt maximal 2,50 mg cm⁻², noch bevorzugter maximal 1,50 mg cm⁻², betragen. Die Gesamtmigration der Polymerzusammensetzung kann nach DIN-EN 1186-14 bestimmt werden. Insbesondere liegt die Gesamtmigration der Polymerzusammensetzung zwischen 0,50 mg cm⁻² und 3,00 mg cm⁻² oder zwischen 0,80 mg cm⁻² und 2,50 mg cm⁻².

Wird ein befülltes Gefäß durch einen Gefäßverschluss mit einem Dichtungselement aus der Polymerzusammensetzung verschlossen und bei einem Oberflächen-/Massenverhältnis von 1 cm⁻² Kontaktfläche des Dichtungselementes zu 0,02 kg Masse des Füllguts in dem Gefäß, wird ein Gesamtmigrationsgrenzwert von 60 mg kg⁻¹ eingehalten.

Es ist bevorzugt, wenn das Dichtungselement des Gefäßverschlusses aus der Polymerzusammensetzung besteht, also beispielsweise das Dichtungselement keine zusätzliche aufgebrachte Folie umfasst.

Unterschiedliche, also verschiedenartige, Polymere in der Polymerzusammensetzung können sich durch ihre physikalischen Eigenschaften (z.B. Dichte, Schmelztemperatur, Härte, usw.) unterscheiden. Copolymere können sich auch durch ihren Aufbau (Block-Copolymer, random-Copolymer, usw.) unterscheiden. Auch können sich Copolymere durch die Art ihrer Comonomere (Ethen, Propen, usw.) unterscheiden.

Der Gefäßverschluss kann einen Träger und das Dichtungselement umfassen. Der Träger kann einen flächigen Abschnitt und einen Schürzenabschnitt umfassen. Speziell kann der Träger Metall, Kunststoff oder Metall und Kunststoff umfassen. Insbesondere ist der Hauptbestandteil des Trägers Metall oder Kunststoff, insbesondere Metall.

Der Gefäßverschluss kann ein Schraubverschluss sein. Bevorzugt ist der Gefäßverschluss ein Nockendrehverschluss. Der Gefäßverschluss kann auch ein Press-on Twist-off-Gefäßverschluss oder ein Composite-Verschluss sein.

Ein offenbarter Gefäßverschluss kann ein Gefäß verschließen. Das Gefäß umfasst eine Gefäßmündung und eine verschließbare Öffnung am Ende der Gefäßmündung. Diese Öffnung verschließt einer der offenbarten Gefäßverschlüsse.

Das Gefäß kann ein Glasgefäß, Kunststoffgefäß oder Metallgefäß sein. Insbesondere ist das Gefäß ein Glasgefäß.

Der Gefäßverschluss, der die Öffnung des Gefäßes verschließt, kann einen Träger und das Dichtungselement umfassen. Der Träger kann eine untere Seite aufweisen und die Gefäßmündung ein oberes Ende aufweisen. Das Dichtungselement des Gefäßverschlusses ist typischerweise zwischen die Gefäßmündung und dem Träger des Gefäßverschlusses eingeklemmt, so dass das Dichtungselement sowohl am oberen Ende der Gefäßmündung als auch an der unteren Seite des Trägers anliegt. Speziell ist die Höhe des Dichtungselements zwischen dem oberen Ende der Gefäßmündung und der unteren Seite des Trägers maximal 1,0 mm. Bevorzugt ist diese Höhe maximal 0,8 mm und besonders bevorzugt maximal 0,7 mm. Die Höhe kann in axialer Richtung des Gefäßes bestimmt werden.

Analog dazu kann die Höhe des Dichtungselements zwischen dem oberen Ende der Gefäßmündung und der unteren Seite des Trägers mindestens 0,2 mm betragen. Speziell beträgt die Höhe mindestens 0,4 mm und besonders bevorzugt mindestens 0,5 mm. Die Messung der Höhe des Dichtungselements kann in axialer Richtung des Gefäßes erfolgen.

Besonders bevorzugt liegt die Höhe des Dichtungselements zwischen dem oberen Ende der Gefäßmündung und der unteren Seite des Trägers zwischen 0,3 mm und 0,9 mm.

Beträgt beispielsweise die Höhe des Dichtungselements vor dem Aufbringen des Gefäßverschlusses auf ein Gefäß 1,2 mm, sorgt ein Eindruck des oberen Endes der Gefäßmündung in das Dichtungselement (Höhe zwischen oberen Ende der Gefäßmündung und unterer Seite des Trägers von maximal 1,0 mm) ohne dass das Dichtungselement durchschnitten wird (Höhe des Dichtungselements zwischen oberen Ende der Gefäßmündung und unterer Seite des Trägers von mindestens 0,2 mm) für eine hohe Dichtigkeit des mit dem Gefäßverschlusses verschlossenen Gefäßes.

Bevorzugt herrscht in dem geschlossenen Gefäß ein Vakuum. Der absolute Druck in dem geschlossenen Gefäß kann maximal 200 hPa betragen. Speziell beträgt der absolute Druck in dem verschlossenen Gefäß maximal 100 hPa.

Das mit dem Gefäßverschluss verschlossene Gefäß kann ein Sicherheitsmaß von maximal 10 mm aufweisen, speziell ist das Sicherheitsmaß maximal 8 mm. Bevorzugt beträgt das Sicherheitsmaß maximal 6 mm. Am meisten bevorzugt beträgt das Sicherheitsmaß maximal 4 mm.

Zur Bestimmung des Sicherheitsmaßes wird ein mit einem Nockendrehverschluss verschlossenes Gefäß bei Raumtemperatur (23°C) für einen Zeitraum von 30 Minuten gelagert. Die relative Position des Gefäßverschlusses zu dem Gefäß wird durch Anbringen einer Markierung auf der Gefäßverschlussschürze und der Gefäßwand so markiert, dass die umfängliche Distanz zwischen der Markierung auf der Gefäßverschlussschürze und der Gefäßwand null ist. Die Markierungen liegen auf einer Geraden, die parallel zur Längsachse des Gefäßes ist. Anschließend wird der Gefäßverschluss vollständig von dem Gefäß durch Abschrauben entfernt. Nachfolgend wird der Gefäßverschluss auf das Gefäß aufgelegt und angedreht, bis ein leichter Widerstand spürbar ist. Der Gefäßverschluss wird also fingerfest angedreht. Anschließend wird die umfängliche Distanz zwischen der Markierung auf der Gefäßverschlussschürze und der Markierung auf der Gefäßwand gemessen. Die gemessene Distanz entspricht dem Sicherheitsmaß ausgedrückt in mm.

Durch die zumindest abschnittsweise starke Steigung der Gewindegänge von Gefäßen und Nockendrehverschlüssen, ist die Präzision der Messung des Sicherheitsmaßes hoch, da der Punkt, an dem ein leichter Widerstand während des Andrehens des Gefäßverschlusses spürbar ist (fingerfest), präzise bestimmbar ist. Typischerweise liegt die Präzision der Messung des Sicherheitsmaßes an verschlossenen Gefäßen, die unter gleichen Bedingungen verschlossen wurden, durch verschiedene Personen bei etwa ±1 mm.

Durch ein passendes Sicherheitsmaß wird sichergestellt, dass das Dichtungselement eine elastische Kraft auf zumindest das obere Ende der Gefäßmündung ausübt, wenn das Gefäß mit dem Gefäßverschluss verschlossen ist. Dadurch ergibt sich eine hohe Dichtigkeit des Innenraums des verschlossenen Gefäßes.

Ein verschlossenes und befülltes Gefäß kann hergestellt werden, indem ein Gefäß mit einer Gefäßmündung und einer verschließbaren Öffnung am Ende der Gefäßmündung bereitgestellt wird. Das Gefäß wird mit einem (festen und/oder flüssigen) Lebensmittel durch die Öffnung des Gefäßes befüllt und die Öffnung des Gefäßes mit einem offenbarten Gefäßverschluss verschlossen.

Die Öffnung des Gefäßes kann einen Durchmesser von mindestens 20 mm aufweisen. Insbesondere ist der Durchmesser der Öffnung des Gefäßes maximal 120 mm.

Das Gefäß kann ein Glasgefäß, Kunststoffgefäß oder Metallgefäß sein.

Der Gefäßverschluss kann, bevor die Öffnung des Gefäßes mit dem Gefäßverschluss verschlossen wird, bei einer Temperatur von mindestens 90 °C behandelt werden. Eine solche Behandlung kann beispielsweise mit Wasserdampf durchgeführt werden.

In dem Gefäß kann ein Kopfraum gebildet werden, nachdem das Gefäß mit dem Lebensmittel befüllt wurde. Der Kopfraum in dem Gefäß ist nach der Befüllung der Abschnitt des Gefäßinhalts, in dem kein Lebensmittel vorhanden ist. Dem Kopfraum kann Dampf zugeführt werden, bevor der Gefäßverschluss auf das Gefäß aufgebracht wird und damit die Öffnung des Gefäßes verschlossen wird. Insbesondere kann der Dampf Wasserdampf sein.

Der absolute Druck in dem verschlossenen und befüllten Gefäß kann maximal 200 hPa betragen. Speziell kann der Druck in dem verschlossenen und befüllten Gefäß maximal 100 hPa betragen.

Zur Bildung eines Eindrucks der Gefäßmündung in das Dichtungselement kann das Dichtungselement während des Verschließens der Öffnung des Gefäßes mit dem Gefäßverschluss und/oder einer thermischen Behandlung des verschlossenen und befüllten Gefäßes mindestens 0,2 mm in axialer Richtung des Gefäßes verformt werden. Bevorzugt beträgt diese Verformung des Dichtungselements mindestens 0,4 mm. Speziell beträgt die Verformung mindestens 0,5 mm.

Analog dazu kann das Dichtungselement zur Bildung eines Eindrucks der Gefäßmündung in das Dichtungselement während des Verschließens der Öffnung des Gefäßes mit dem Gefäßverschluss und/oder einer thermischen Behandlung des verschlossenen und befüllten Gefäßes um maximal 1,0 mm verformt werden. Insbesondere beträgt die Verformung maximal 0,8 mm. Bevorzugter beträgt die Verformung maximal 0,7 mm. Dies jeweils in axialer Richtung des Gefäßes.

Besonders bevorzugt beträgt die Verformung des Dichtungselements zwischen 0,3 mm und 0,9 mm.

Das Lebensmittel kann aseptisch in das Gefäß eingefüllt werden.

Das Lebensmittel kann auch mit einer Temperatur von maximal 10 °C in das Gefäß gefüllt werden.

Das Lebensmittel kann auch mit einer Temperatur zwischen 10 °C und 70 °C in das Gefäß gefüllt werden.

Ebenso kann das Lebensmittel mit einer Temperatur zwischen 70 °C und 98 °C in das Gefäß gefüllt werden.

Innerhalb des Verfahrens kann das verschlossene und befüllte Gefäß thermisch behandelt werden. Dabei liegt die Temperatur der thermischen Behandlung oberhalb der Temperatur des (festen und/oder flüssigen) Lebensmittels während der Befüllung des Gefäßes damit.

Die thermische Behandlung kann bei einer Temperatur von mindestens 60°C erfolgen.

Auch kann die thermische Behandlung bei einer Temperatur von maximal 135°C erfolgen (zwischen 60 °C und 135 °C). Insbesondere erfolgt die thermische Behandlung bei einer Temperatur von bis zu 135°C (zwischen 60 °C und 135 °C) bei einem absoluten Umgebungsdruck von maximal 4,0 bar, bevorzugt bei einem absoluten Umgebungsdruck zwischen 1,0 bar und 4,0 bar.

Bevorzugt ist der Druck in dem verschlossenen Gefäß während einer thermischen Behandlung geringer als der Druck außerhalb des verschlossenen Gefäßes.

Die Ausführungsformen der Erfindung sind anhand von einem Beispiel dargestellt und nicht auf eine Weise, in der Beschränkungen aus den Figuren in die Patentansprüche übertragen oder hineingelesen werden. Gleiche Bezugszeichen in den Figuren geben gleiche Elemente an.
- Figur 1: zeigt eine Seitenansicht eines Nockendrehverschlusses 1 mit einem ringförmigen Dichtungselement 3, teilweise als Schnitt;
- Figur 2: zeigt eine Seitenansicht des Nockendrehverschlusses 1 mit dem Dichtungselement 3 auf einem Gefäß 5, teilweise als Schnitt;
- Figur 3: zeigt den Nockendrehverschluss 1 mit dem Dichtungselement 3 in einer Untersicht;
- Figur 4: zeigt eine isometrische Ansicht eines Composite-Verschlusses 61 (Combi-Twist);
- Figur 5: zeigt teilweise einen axialen Schnitt des Composite-Verschlusses 61 (Combi-Twist) von Figur 4;
- Figur 6: zeigt eine Seitenansicht eines Press-on Twist-off-Verschlusses 21 (PT-Verschluss) mit einem Dichtungselement 23, teilweise als Schnitt;
- Figur 7: zeigt eine Seitenansicht des PT-Verschlusses 21 mit dem Dichtungselement 23 auf einem Gefäß 25, teilweise als Schnitt;
- Figur 8: zeigt eine Draufsicht des PT-Verschlusses 21;
- Figur 9: zeigt eine Seitenansicht eines Composite-Verschlusses 41 (Band-Guard) mit einem Dichtungselement 43, teilweise als Schnitt;
- Figur 10: zeigt eine Seitenansicht des Composite-Verschlusses 41 (Band-Guard) mit dem Dichtungselement 43 auf einem Gefäß 45, teilweise als Schnitt;
- Figur 11: zeigt eine Draufsicht des Composite-Verschlusses 41 (Band-Guard);
- Figur 12: zeigt einen vergrößerten Ausschnitt des Nockendrehverschlusses von Figur 2.

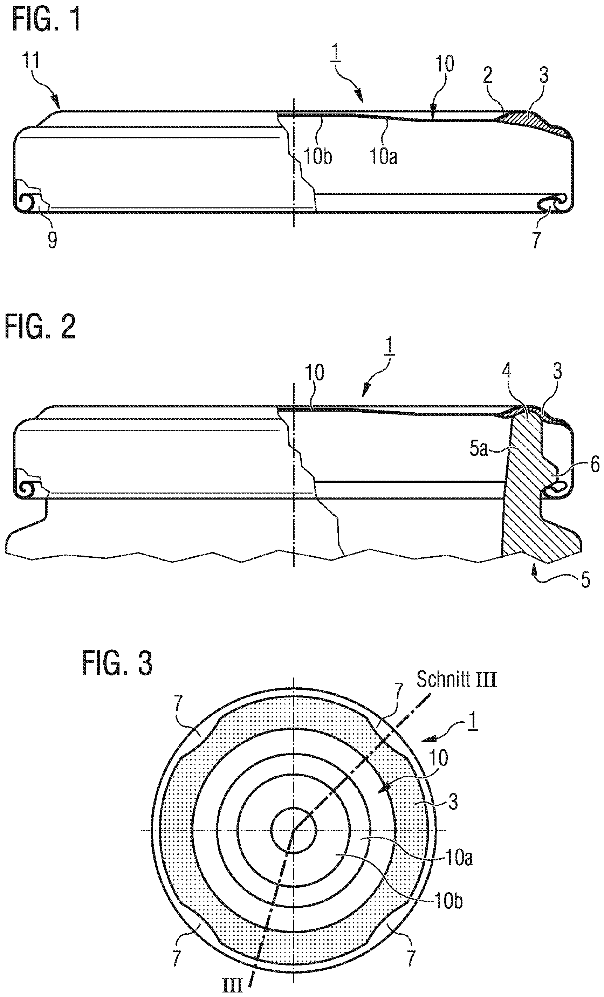

Die Figuren 1 und 3 zeigen einen Nockendrehverschluss 1. Der Nockendrehverschluss 1 umfasst einen metallischen Träger 11 und ein Dichtungselement 3. In der Darstellung der Figur 2 ist der Nockendrehverschluss 1 auf ein Gefäß 5 aufgebracht. An dem unteren Ende des Nockendrehverschlusses 1 ist eine Einrollung 9 ausgebildet. Mehrere Nocken 7 sind umfänglich verteilt aus der Einrollung 9 ausgebildet. Nocken 7 sind durch eine axiale Verformung der Einrollung 9 geformt und erstrecken sich radial weiter zur Mitte des Nockendrehverschlusses 1 als die Einrollung 9. Der in den Figuren 1 bis 3 abgebildete Nockendrehverschluss 1 umfasst vier Nocken 7, die umfänglich gleichmäßig verteilt ausgebildet sind. Die Schnitte, die in den Figuren 1 und 2 teilweise abgebildet sind, entsprechen dem Schnitt III-III in Figur 3.

Nahe dem radial äußeren Endabschnitt des Nockendrehverschlusses 1 ist ein Kanal 2 in dem oberen Abschnitt 10 des Trägers 11 ausgebildet. Das Dichtungselement 3 ist zumindest teilweise in dem Kanal 2 angeordnet. In dieser Ausführungsform ist das Dichtungselement 3 ringförmig ausgestaltet, in anderen Ausführungsformen kann das Dichtungselement 3 scheibenförmig ausgestaltet sein, dies insbesondere wenn der Durchmesser des Nockendrehverschlusses klein (z.B. maximal 30 mm) ist.

Zur Haftvermittlung zwischen dem metallischen Träger 11 und dem Dichtungselement 3 ist typischerweise ein Haftlack auf die Seite des metallischen Trägers 11 aufgebracht, die mit dem Dichtungselement 3 in Kontakt steht.

In Figur 2 ist der Nockendrehverschluss 1 auf ein Gefäß 5 aufgebracht. Das Gefäß 5 umfasst eine Gefäßmündung 5a als oberen Abschnitt des Gefäßes 5. Die Gefäßmündung umfasst ein Gewinde 6 und ein oberes Ende 4 der Gefäßmündung 5a. Das Gewinde 6 ist umlaufend im Bereich der Gefäßmündung 5a ausgebildet und erstreckt sich umlaufend aufwärts oder abwärts (in Abhängigkeit des Blickwinkels).

Zum Aufbringen des Nockendrehverschlusses 1 auf ein Gefäß 5 werden Nocken 7 mit Abschnitten des Gewindes 6 in Kontakt gebracht und der Nockendrehverschluss 1 im Uhrzeigersinn relativ zum Gefäß 5 gedreht. Durch die Ausgestaltung des Gewindes 6 und die Interaktion der Nocken 7 mit dem Gewinde 6 bewegt sich das obere Ende 4 der Gefäßmündung 5a in Richtung des Dichtungselements 3 während der Drehbewegung des Nockendrehverschlusses 1 relativ zu dem Gefäß 5. Durch eine weitere Drehbewegung des Nockendrehverschlusses 1 drückt das obere Ende 4 der Gefäßmündung 5a in das Dichtungselement 3 ein und verformt dieses, sodass ein Abschnitt des oberen Endes 4 der Gefäßmündung 5a von dem Dichtungselement 3 bedeckt ist, wodurch das Gefäß 5 dicht verschlossen ist. Ein dichter Verschluss des Gefäßes 5 ist insbesondere notwendig, um einem erhöhten Druck während einer thermischen Behandlung des verschlossenen Gefäßes 5 bei Temperaturen oberhalb von 70 °C, 90 °C oder sogar oberhalb von 120 °C Stand zu halten.

Der Nockendrehverschluss 1, wie in den Figuren 1 bis 3 abgebildet, umfasst einen Safety Button 10b, der in dem oberen Abschnitt 10 des Trägers 11 ausgebildet ist. Aufgrund der Steigung 10a in dem oberen Abschnitt 10 des Trägers 11 klappt der Safety Button 10b in Richtung der Mitte des Gefäßes, wenn ein ausreichend großer Unterdruck in dem Gefäß vorliegt. Ein solches Vakuum kann durch das Einbringen von Wasserdampf in das Gefäß vor dem Verschließen des Gefäßes mit dem Verschluss erzeugt werden.

Öffnet ein Verbraucher das Gefäß, indem der Gefäßverschluss entfernt wird, steigt der Druck in dem Gefäß auf Umgebungsdruck und der Safety Button 10b klappt von der Mitte des Gefäßes weg. Das Umklappen des Safety Buttons 10b wird von einem charakteristischen Geräusch begleitet, durch das ein Verbraucher erkennen kann, dass vor dem Öffnen des Gefäßes ein Vakuum in dem Gefäß geherrscht hat.

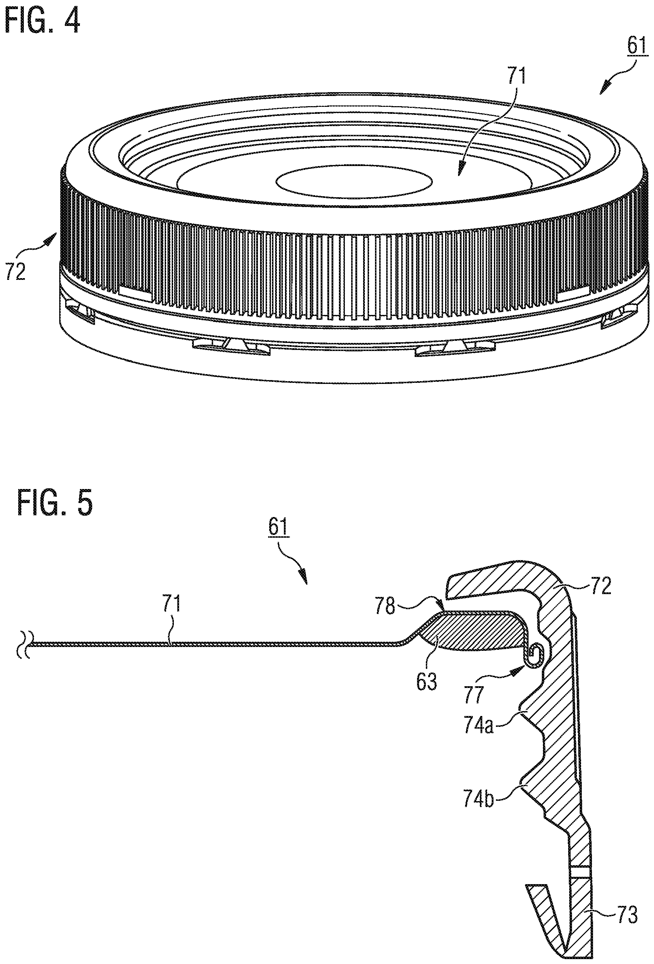

Die Figuren 4 und 5 zeigen einen Composite-Verschluss 61 (Combi-Twist), der analog zu dem beschriebenen Nockendrehverschluss 1 durch eine Drehbewegung auf ein Gefäß aufgebracht werden kann und durch eine Drehbewegung von dem Gefäß entfernt werden kann.

Der Composite-Verschluss 61 umfasst einen Träger mit einem oberen metallischen Abschnitt 71 und einem Kunststoff-Abschnitt 72, der L-förmig geformt ist. Nahe dem radialen Ende des metallischen Abschnitts 71 des Trägers ist ein Kanal 78 geformt und eine Rollung 77 ist am radialen Ende des metallischen Abschnitts 71 ausgebildet. Ein Dichtungselement ist zumindest teilweise in dem Kanal 78 angeordnet.

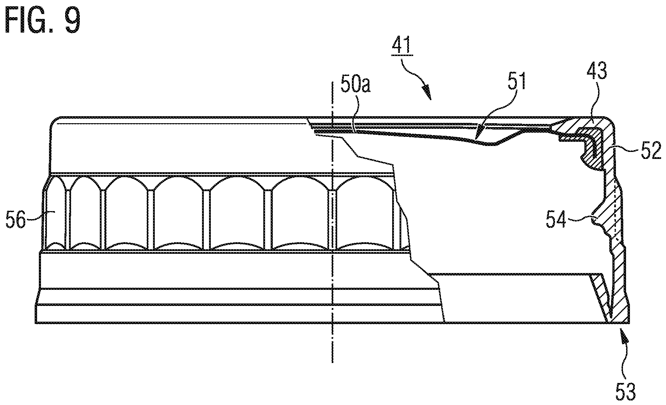

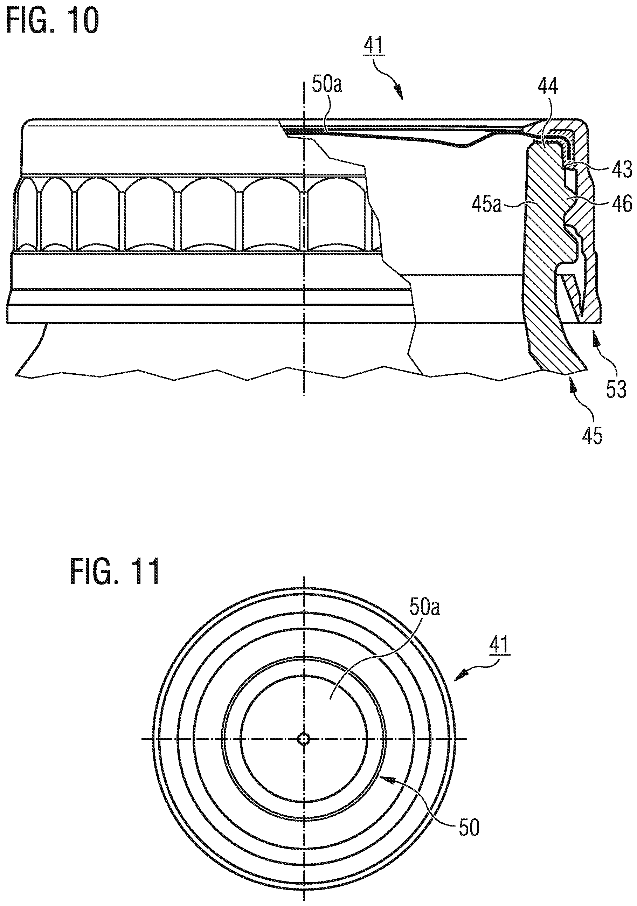

Mehrere, auf der Innenseite des Kunststoff-Abschnitts 72 gebildete Gewindeelemente 74a, 74b kontaktieren mit einem Gegengewinde im Bereich der Mündung eines Gefäßes (nicht dargestellt), auf das der Composite-Verschluss 61 aufgebracht werden soll. Der Kunststoff-Abschnitt 72 des Composite-Verschlusses 61 umfasst weiterhin eine Originalitätssicherung 73, die ähnlich der Originalitätssicherung wie in den Figuren 9 bis 11 ausgestaltet ist und mit Blick auf die Figuren 9 bis 11 näher beschrieben wird.

Wird der Composite-Verschluss 61 auf ein Gefäß durch eine Drehbewegung aufgeschraubt, ergibt sich eine analoge Interaktion der Gefäßmündung des Gefäßes mit dem Dichtungselement des Composite-Verschlusses 61 wie anhand des Nockendrehverschlusses 1 beschrieben.

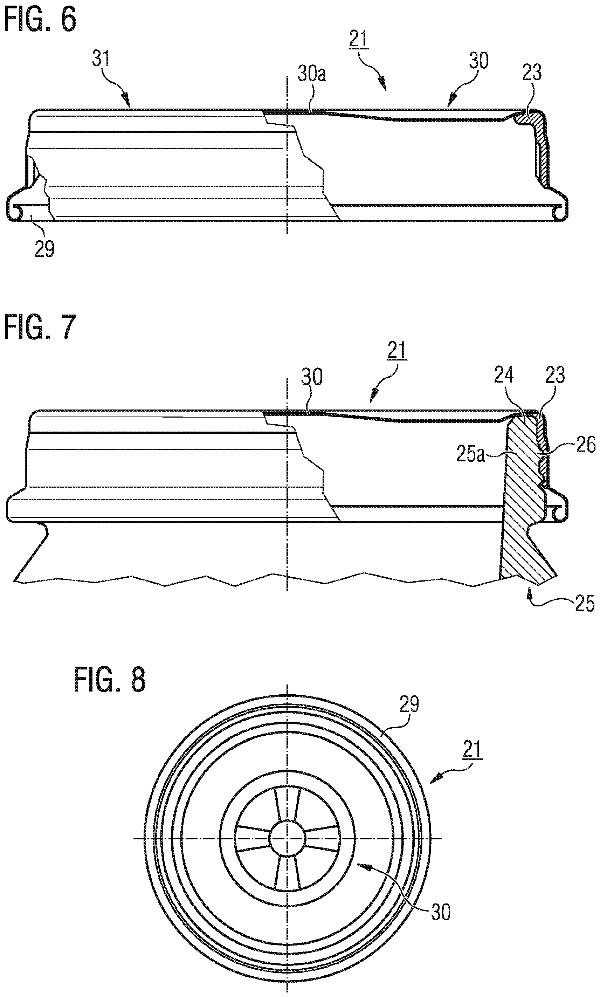

In den Figuren 6 bis 8 ist ein Press-on Twist-Off-Verschluss 21 (PT-Verschluss) abgebildet. Der PT-Verschluss 21 umfasst einen metallischen Träger 31 mit einer Einrollung 29 am unteren Ende des Trägers 31 und einem Safety Button 30a in dem oberen Abschnitt 30 des Trägers 31.

Ein Dichtungselement 23 ist sowohl im Bereich des oberen Abschnitts 30 des Trägers 31 als auch in erheblichem Umfang auf der Schürze des Trägers, die sich ausgehend von dem oberen Abschnitt 30 des Trägers 31 nach unten erstreckt, ausgebildet. Der PT-Verschluss 21 wird im Gegensatz zu dem Nockendrehverschluss 1 und dem Composite-Verschluss 61 bei einem Aufbringen auf ein Gefäß 25, auf die Gefäßmündung 25a aufgepresst. Während des Aufpressens auf die Gefäßmündung 25a ist das Dichtungselement 23 ausreichend weich, um Gewindeelemente 26 der Gefäßmündung 25a elastisch zu umschließen. Typischerweise wird hierfür das Dichtungselement 23 vor dem Aufbringen des PT-Verschlusses 21 auf ein Gefäß 5 mit Wasserdampf behandelt, um die nötige Weichheit des Dichtungselements 23 zu verursachen. Nach Abkühlung des Dichtungselements 23 ist ein Gegengewinde in Form eines Negativs der Gewindeelemente 26 der Gefäßmündung in dem Dichtungselement 23 gebildet.

Ein oberes Ende 24 der Gefäßmündung 25a kontaktiert das Dichtungselement 23.

Zum Öffnen des Gefäßes 25, wird der PT-Verschluss 21 durch eine Drehbewegung von dem Gefäß 25 entfernt.

Figuren 9 bis 11 zeigen einen Composite-Verschluss 41 (Band-Guard), der analog zu dem beschriebenen PT-Verschluss 21 funktionsfähig ist.

Der Composite-Verschluss 41 umfasst einen Träger mit einem metallischen Abschnitt 51 und einem Kunststoff-Abschnitt 52, eine Originalitätssicherung 53 und einen Safety Button 50a. Die Originalitätssicherung 53 ist so ausgestaltet, dass diese von dem übrigen Composite-Verschluss 41 entfernt wird, wenn der Composite-Verschluss 41 von einem Gefäß 45 entfernt wird, und dient der Überprüfbarkeit eines Verbrauchers, ob der Composite-Verschluss 41 bereits von dem Gefäß 45 entfernt wurde. Der Safety Button 50a ist analog zu dem Safety Button 10b des Nockendrehverschlusses 1 ausgestaltet und funktionsfähig.

Der Kunststoff-Abschnitt des Composite-Verschluss 41 kann mehrere axial verlaufende Einbuchtungen 56 umfassen, um die Stabilität des Verschlusses zu erhöhen.

Ein Dichtungselement 43 ist so in dem Composite-Verschluss 41 angeordnet, dass dieses sowohl den metallischen Abschnitt 51 als auch den Kunststoff-Abschnitt 52 kontaktiert. Zum Verschließen eines Gefäßes 45 wird der Composite-Verschluss 41 auf die Gefäßmündung 45a des Gefäßes 45 aufgepresst, sodass zumindest das obere Ende 44 der Gefäßmündung 45a das Dichtungselement 43 kontaktiert.

Der Kunststoff-Abschnitt 52 des Trägers umfasst mehrere versetzte Vorsprünge 54, die mit Gewindeelementen 46 der Gefäßmündung 45a interagieren. Zum Öffnen eines Gefäßes 45, das mit dem Composite-Verschluss 41 verschlossen ist, kann der Composite-Verschluss 41 relativ zu dem Gefäß 45 verdreht werden.

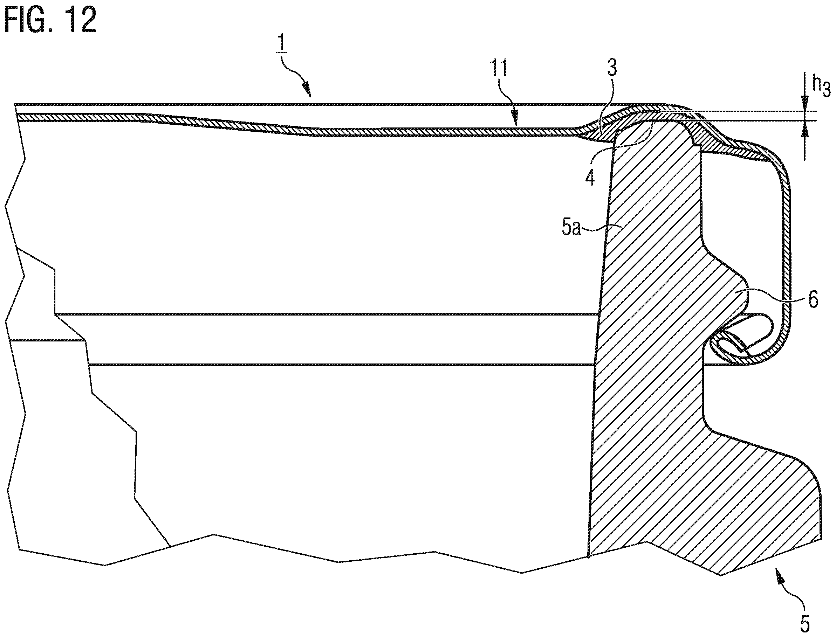

Der Abstand h₃ eines Dichtungselements 3 zwischen einem oberen Ende 4 einer Gefäßmündung 5a eines Gefäßes 5 und der unteren Seite eines Trägers 11 des Verschlusses 1 ist in Figur 12 mit Blick auf einen Nockendrehverschluss 1 dargestellt und hier beschrieben. Analog ist der Abstand (Höhe) h₃ für andere Verschluss-Typen zu bestimmen.

Das zwischen der Gefäßmündung 5 und dem Träger 11 des Gefäßverschlusses 1 eingeklemmte Dichtungselement 3 besitzt eine Höhe h₃, die gegeben ist, wenn ein Gefäß 5 mit dem Verschluss 1 verschlossen ist. Ist die Höhe h₃ zu gering droht eine Durchschneidung des Dichtungselements 3, wodurch die Dichtigkeit des verschlossenen Gefäßes 5 beeinträchtigt sein kann. Ist die Höhe h₃ zu groß, ist die Dichtigkeit des verschlossenen Gefäßes beeinträchtigt, da die Kontaktfläche zwischen dem oberen Ende 4 der Gefäßmündung 5a und dem Dichtungselement 3 nicht ausreichend groß ist. Um einen passenden Eindruck des oberen Endes 4 der Gefäßmündung 5a in das Dichtungselement zu erreichen, ist die Zusammensetzung des Dichtungselements 3 maßgebend.

### Beispiele:

Beispiele von Polymerzusammensetzungen für Dichtungselemente in einem Gefäßverschluss sind in den Tabellen 1, 2 und 3 dargestellt. Die Beispiele sind mit Ex. und einer fortlaufenden Nummer für das jeweilige Beispiel benannt.

Die in den Tabellen dargestellten Bezeichnungen der Komponenten stehen für ...

| | |
|---|---|
| PAO-5 | Polyalphaolefin mit einer kinematischen Viskosität bei 100 °C von etwa 5 cSt, |
| PAO-65 | Polyalphaolefin mit einer kinematischen Viskosität bei 100 °C von etwa 65 cSt, |
| PAO-150 | Polyalphaolefin mit einer kinematischen Viskosität bei 100 °C von etwa 150 cSt, |
| PAO-300 | Polyalphaolefin mit einer kinematischen Viskosität bei 100 °C von etwa 300 cSt, |
| C4C2 | alpha-Buten-Ethen-Copolymer mit einem alpha-Buten-Anteil von mehr als 50 mol-%, |
| C4C3 | alpha-Buten-Propen-Copolymer mit einem alpha-Buten-Anteil von mehr als 50 mol-%, |
| C2 | Ethen-Homopolymer (LDPE), |
| C3C2 | Propen-Ethen-Copolymer mit einem Propen-Anteil von mehr als 50 mol-%, |
| C3C6 | Propen-alpha-Hexen-Copolymer mit einem Propen-Anteil von mehr als 50 mol-%, |
| C4 | alpha-Buten-Homopolymer. |

Die Polyalphaolefine (PAO-5, PAO-65, PAO-150, PAO-300) sind von Chevron Phillips oder von ExxonMobil (z.B. SpectraSyn-Serie) kommerziell erhältlich.

Das alpha-Buten-Ethen-Copolymer weist eine Shore A Härte von 60 und eine Dichte von 0,870 g cm⁻³ auf.

Das alpha-Buten-Propen-Copolymer besitzt eine Shore A Härte von 87 und eine Dichte von 0,890 g cm⁻³.

Das Ethen-Homopolymer zeigt eine Shore D Härte von 48 und eine Dichte von 0,928 g cm⁻³.

Die Dichte des Propen-Ethen-Copolymers liegt bei 0,900 g cm⁻³.

Das Propen-alpha-Hexen-Copolymer zeigt eine Dichte von 0,900 g cm⁻³.

Das alpha-Buten-Homopolymer besitzt eine Shore D Härte von 54.

**Tabelle 1**

| | **Ex. 1** | **Ex. 2** | **Ex. 3** | **Ex. 4** | **Ex. 5** | **Ex. 6** | **Ex. 7** |
|---|---|---|---|---|---|---|---|
| **Komponente, Gew.-%** | | | | | | | |
| PAO-5 | 4,8 | 9,1 | 16,7 | | | | 9,1 |
| PAO-65 | | | | 9,1 | | | |
| PAO-150 | | | | | 9,1 | | |
| PAO-300 | | | | | | 9,1 | |
| C4C2 | 68,5 | 65,4 | 59,9 | 65,4 | 65,4 | 65,4 | |
| C4C3 | | | | | | | 87,2 |
| C2 | 15,2 | 14,5 | 13,3 | 14,5 | 14,5 | 14,5 | |
| C3C2 | 7,6 | 7,3 | 6,7 | 7,3 | 7,3 | 7,3 | |
| C3C6 | | | | | | | |
| C4 | | | | | | | |
| Additive | 3,9 | 3,7 | 3,4 | 3,7 | 3,7 | 3,7 | 3,7 |

| **Eigenschaft** | | | | | | | |
|---|---|---|---|---|---|---|---|
| Reibungskoeffizient, dimensionslos | 0,31 | 0,33 | 0,39 | 0,36 | 0,23 | 0,18 | 0,28 |
| Gesamtmigration, mg cm⁻² | 2,14 | 3,27 | 5,11 | 1,35 | 1,15 | 0,99 | 2,90 |
| Sauerstoffdurchlässigkeitsrate cm³ m⁻² d⁻¹ bar⁻¹ | 662 | 809 | 1162 | 732 | 681 | 650 | 680 |

**Tabelle 2**

| | **Ex. 8** | **Ex. 9** | **Ex. 10** | **Ex. 11** | **Ex. 12** | **Ex. 13** | **Ex. 14** | **Ex. 15** | **Ex. 16** |
|---|---|---|---|---|---|---|---|---|---|
| **Komponente Gew.-%** | | | | | | | | | |
| PAO-300 | 20,0 | 30,0 | 40,0 | 5,0 | 10,0 | 20,0 | 10,0 | 10,0 | 10,0 |
| C4C2 | | | | 90,9 | 85,9 | 75,9 | 61,9 | 61,9 | 61,9 |
| C4C3 | 75,9 | 65,9 | 55,9 | | | | | | |
| C2 | | | | | | | 24,0 | | |
| C3C6 | | | | | | | | 24,0 | |
| C4 | | | | | | | | | 24,0 |
| Additive Gew.-% | 4,1 | 4,1 | 4,1 | 4,1 | 4,1 | 4,1 | 4,1 | 4,1 | 4,1 |

**Tabelle 3**

| | **Ex. 17** | **Ex. 18** | **Ex. 19** | **Ex. 20** | **Ex. 21** | **Ex. 22** | **Ex. 23** | **Ex. 24** |
|---|---|---|---|---|---|---|---|---|
| **Komponente Gew.-%** | | | | | | | | |
| PAO-5 | 9,1 | 16,7 | 9,1 | 16,7 | | | | |
| PAO-300 | | | | | 5,0 | 10,0 | 30,0 | 40,0 |
| C4C2 | 65,4 | 59,9 | 65,4 | 59,9 | | | 65,9 | 55,9 |
| C4C3 | | | | | 90,9 | 85,9 | | |
| C2 | 14,5 | 13,3 | 14,5 | 13,3 | | | | |
| C3C6 | 7,3 | 6,7 | | | | | | |
| C4 | | | 7,3 | 6,7 | | | | |
| Additive Gew.-% | 3,7 | 3,4 | 3,7 | 3,4 | 4,1 | 4,1 | 4,1 | 4,1 |

Allgemein ist keine spezifische Komponente zwingend in einer der PolymerZusammensetzungen oder der Polymerzusammensetzung vorhanden. Spezifisch ist ein vermehrtes Auftreten einer Komponente in den Beispielen kein Indiz dafür, dass diese Komponente zwingend in der Polymerzusammensetzung enthalten sein muss. Vielmehr können Komponenten aus den Zusammensetzungen der Beispiele weggelassen oder durch andere Komponente(n) ersetzt werden. Ebenso können Komponenten hinzugefügt werden.

## Patentansprüche

1. Gefäßverschluss (1, 21, 41, 61) mit einem Dichtungselement (3, 23, 43, 63), wobei das Dichtungselement (3, 23, 43, 63) eine Polymerzusammensetzung umfasst und die Polymerzusammensetzung umfasst ...
(a) ein Polyalphaolefin mit einer kinematischen Viskosität, bestimmt nach ASTM D445 / ISO 3104, von zumindest 4 cSt, bei einer Temperatur von 100 °C, und/oder mit einem Tropfpunkt, bestimmt nach ASTM 5950, von höchstens -10 °C; und
(b) bis zu 95 Gew.-% eines zweiten Polyolefins.

2. Gefäßverschluss nach Anspruch 1, wobei das Polyalphaolefin mit einem Anteil von bis zu 65 Gew.-%, bevorzugt zwischen 3 Gew.-% und 65 Gew.-%, mehr bevorzugt zwischen 3 Gew.-% und 50 Gew.-%, noch mehr bevorzugt zwischen 3 Gew.-% und 30 Gew.-%, am meisten bevorzugt zwischen 5 Gew.-% und 30 Gew.-%, in der Polymerzusammensetzung enthalten ist.

3. Gefäßverschluss nach einem der vorhergehenden Ansprüche, wobei das zweite Polyolefin eine Shore A Härte, bestimmt nach DIN ISO 7619-1 bei 23 °C, von höchstens 90, insbesondere zwischen 30 und 90, aufweist.

4. Gefäßverschluss nach einem der vorhergehenden Ansprüche, wobei die Polymerzusammensetzung ein drittes Polymer umfasst, wobei das dritte Polymer eine Shore D Härte, bestimmt nach DIN ISO 7619-1 bei 23 °C, von höchstens 60, insbesondere zwischen 20 und 60, aufweist.

5. Gefäßverschluss nach Anspruch 4, wobei das dritte Polymer ein Homopolymer ist und das Homopolymer aus einem C₂ bis C₁₂ (alpha-)Olefin, bevorzugt aus einem aus einem C₂ bis C₈ (alpha-)Olefin, besonders bevorzugt aus einem C₂ bis C₆ (alpha-)Olefin, aufgebaut ist.

6. Gefäßverschluss nach Anspruch 4, wobei das dritte Polymer ein Copolymer ist und das Copolymer zumindest ein oder zumindest zwei C₂ bis C₁₂ (alpha-)Olefine als Comonomere, bevorzugt zumindest ein oder zumindest zwei C₂ bis C₈ (alpha-)Olefine als Comonomere, besonders bevorzugt zumindest ein oder zumindest zwei C₂ bis C₆ (alpha-)Olefine als Comonomere, umfasst.

7. Gefäßverschluss nach einem der vorhergehenden Ansprüche, wobei die Polymerzusammensetzung ein viertes Polymer umfasst, wobei das vierte Polymer mit einem Anteil von höchstens 35 Gew.-%, bevorzugt zwischen 5 Gew.-% und 35 Gew.- %, besonders bevorzugt zwischen 5 Gew.-% und 27 Gew.-%, noch bevorzugter zwischen 5 Gew.-% und 18 Gew.-%, am meisten bevorzugt zwischen 11 Gew.-% und 18 Gew.-%, enthalten ist.

8. Gefäßverschluss nach Anspruch 7, wobei das vierte Polymer ein Homopolymer ist und das Homopolymer aus einem C₂ bis C₁₂ (alpha-)Olefin, bevorzugt aus einem aus einem C₂ bis C₈ (alpha-)Olefin, besonders bevorzugt aus einem C₂ bis C₆ (alpha-)Olefin, aufgebaut ist.

9. Gefäßverschluss nach Anspruch 7, wobei das vierte Polymer ein Copolymer ist und das Copolymer zumindest ein oder zumindest zwei C₂ bis C₁₂ (alpha-)Olefine als Comonomere, bevorzugt zumindest ein oder zumindest zwei C₂ bis C₈ (alpha-)Olefine als Comonomere, besonders bevorzugt zumindest ein oder zumindest zwei C₂ bis C₆ (alpha-)Olefine als Comonomere, umfasst.

10. Gefäßverschluss nach einem der vorhergehenden Ansprüche, wobei die Polymerzusammensetzung eine Sauerstoffdurchlässigkeitsrate, bestimmt nach DIN 53380, von weniger als 1300 cm³ m⁻² d⁻¹bar⁻¹, bevorzugt von weniger als 900 cm³ m⁻² d⁻¹bar⁻¹, mehr bevorzugt von weniger als 750 cm³ m⁻² d⁻¹bar⁻¹, aufweist.

11. Gefäß (5, 25, 45) mit einer Gefäßmündung (5a, 25a, 45a) und einer verschließbaren Öffnung am Ende der Gefäßmündung, wobei die Öffnung mit einem Gefäßverschluss (1, 21, 41, 61) nach einem der vorhergehenden Ansprüche verschlossen ist.

12. Gefäß nach Anspruch 11, wobei der Gefäßverschluss einen Träger (11, 31, 51, 71) und das Dichtungselement (3, 23, 43, 63) umfasst, und wobei das Dichtungselement zwischen einem oberen Ende (4, 24, 44) der Gefäßmündung und einer unteren Seite des Trägers (11, 31, 51, 71) eine Höhe (h3) von maximal 1,0 mm, bevorzugt maximal 0,8 mm, besonders bevorzugt maximal 0,7 mm, in axialer Richtung des Gefäßes aufweist; und/oder wobei der Gefäßverschluss einen Träger (11, 31, 51, 71) und das Dichtungselement (3, 23, 43, 63) umfasst, und wobei das Dichtungselement zwischen einem oberen Ende (4, 24, 44) der Gefäßmündung und einer unteren Seite des Trägers (11, 31, 51, 71) eine Höhe (h3) von mindestens 0,2 mm, bevorzugt mindestens 0,4 mm, besonders bevorzugt mindestens 0,5 mm, in axialer Richtung des Gefäßes aufweist.

13. Verfahren zur Herstellung eines verschlossenen und befüllten Gefäßes, mit den Schritten:
(a) Bereitstellen eines Gefäßes (1, 21, 41, 61) mit einer Gefäßmündung (5a, 25a, 45a) und einer verschließbaren Öffnung am Ende der Gefäßmündung;
(b) Befüllen des Gefäßes mit einem Lebensmittel durch die Öffnung des Gefäßes;
(c) Verschließen der Öffnung des Gefäßes mit einem Gefäßverschluss nach einem der Ansprüche 1 bis 10.

14. Verfahren nach Anspruch 13, wobei der Gefäßverschluss bei einer Temperatur von mindestens 90 °C behandelt wird, bevor die Öffnung des Gefäßes mit dem Gefäßverschluss verschlossen wird.

15. Verfahren nach einem der Ansprüche 13 oder 14, wobei der absolute Druck in dem verschlossenen und befüllten Gefäß maximal 200 hPa, bevorzugt maximal 100 hPa, beträgt.

## Claims

1. Vessel closure (1, 21, 41, 61) with a sealing element (3, 23, 43, 63), wherein the sealing element (3, 23, 43, 63) comprises a polymer composition and the polymer composition comprises ...
(a) a polyalphaolefin with a kinematic viscosity, determined according to ASTM D445 / ISO 3104, of at least 4 cSt, at a temperature of 100°C, and/or with a dropping point, determined according to ASTM 5950, of at most -10°C; and
(b) up to 95% by weight of a second polyolefin.

2. Vessel closure according to claim 1, wherein the polyalphaolefin is present in the polymer composition at a level of up to 65% by weight, preferably between 3% and 65% by weight, more preferably between 3% and 50% by weight, even more preferably between 3% and 30% by weight, most preferably between 5% and 30% by weight.

3. Vessel closure according to one of the preceding claims, wherein the second polyolefin has a Shore A hardness, determined according to DIN ISO 7619-1 at 23°C, of at most 90, in particular between 30 and 90.

4. Vessel closure according to one of the preceding claims, wherein the polymer composition comprises a third polymer, wherein the third polymer has a Shore D hardness, determined according to DIN ISO 7619-1 at 23°C, of at most 60, in particular between 20 and 60.

5. Vessel closure according to claim 4, wherein the third polymer is a homopolymer composed of a C₂ to C₁₂ (alpha)olefin, preferably of a C₂ to C₈ (alpha-)olefin, particularly preferably of a C₂ to C₆ (alpha-)olefin.

6. Vessel closure according to claim 4, wherein the third polymer is a copolymer and the copolymer comprises at least one or at least two C₂ to C₁₂ (alpha-)olefins as comonomers, preferably at least one or at least two C₂ to C₈ (alpha-)olefins as comonomers, particularly preferably at least one or at least two C₂ to C₆ (alpha-)olefins as comonomers.

7. Vessel closure according to one of the preceding claims, wherein the polymer composition comprises a fourth polymer, wherein the fourth polymer is present in the polymer composition at a level of at most 35% by weight, preferably between 5% and 35% by weight, more preferably between 5% and 27% by weight, even more preferably between 5% and 18% by weight, most preferably between 11% and 18% by weight.

8. Vessel closure according to claim 7, wherein the fourth polymer is a homopolymer and the homopolymer is composed of a C₂ to C₁₂ (alpha)olefin, preferably of a C₂ to C₈ (alpha-)olefin, particularly preferably of a C₂ to C₆ (alpha-)olefin.

9. Vessel closure according to claim 7, wherein the fourth polymer is a copolymer and the copolymer includes at least one or at least two C₂ to C₁₂ (alpha-)olefins as comonomers, preferably at least one or at least two C₂ to C₈ (alpha-)olefins as comonomers, particularly preferably at least one or at least two C₂ to C₆ (alpha-)olefins as comonomers.

10. Vessel closure according to any one of the preceding claims, wherein the polymer composition has an oxygen transmission rate, determined according to DIN 53380, of less than 1300 cm³ m⁻² d⁻¹ bar⁻¹, preferably of less than 900 cm³ m⁻² d⁻¹ bar⁻¹, more preferably of less than 750 cm³ m⁻² d⁻¹ bar⁻¹.

11. Vessel (5, 25, 45) with a vessel mouth (5a, 25a, 45a) and a closable opening at the end of the vessel mouth, wherein the opening is closed with a vessel closure (1, 21, 41, 61) according to any one of the preceding claims.

12. Vessel according to claim 11, wherein the vessel closure comprises a carrier (11, 31, 51, 71) and the sealing element (3, 23, 43, 63) and wherein the sealing element between an upper end (4, 24, 44) of the vessel mouth and a lower side of the carrier (11, 31, 51, 71) has a height (h3) of at most 1.0 mm, preferably at most 0.8 mm, particularly preferably at most 0.7 mm, in the axial direction of the vessel; and/or wherein the vessel closure comprises a carrier (11, 31, 51, 71) and the sealing element (3, 23, 43, 63), and wherein the sealing element has a height (h3) between an upper end (4, 24, 44) of the vessel mouth and a lower side of the carrier (11, 31, 51, 71) of at least 0.2 mm, preferably at least 0.4 mm, particularly preferably at least 0.5 mm, in the axial direction of the vessel.

13. A method for producing a sealed and filled vessel with the following steps:
(a) Provision of a vessel (1, 21, 41, 61) with a vessel mouth (5a, 25a, 45a) and a closable opening at the end of the vessel mouth;
(b) Filling of the vessel with a foodstuff through the opening of the vessel;
(c) Closing of the opening of the vessel with a vessel closure according to any one of claims 1 to 10.

14. The method of claim 13, wherein the vessel closure is treated at a temperature of at least 90°C before the opening of the vessel is closed with the vessel closure.

15. A method according to any one of claims 13 or 14, wherein the absolute pressure in the sealed and filled vessel is at most 200 hPa, preferably at most 100 hPa.

## Revendications

1. Fermeture de récipient (1, 21, 41, 61) avec un élément d'étanchéité (3, 23, 43, 63), dans laquelle l'élément d'étanchéité (3, 23, 43, 63) comprend une composition polymère et la composition polymère comprend :
(a) une poly(alpha-oléfine) ayant une viscosité cinématique, déterminée selon la norme ASTM D445 / ISO 3104, d'au moins 4 cSt à une température de 100 °C et/ou ayant un point de goutte, déterminé selon la norme ASTM 5950, d'au plus - 10 °C ; et
(b) jusqu'à 95 % en poids d'une seconde polyoléfine.

2. Fermeture de récipient selon la revendication 1, dans laquelle la poly(alpha-)oléfine est présente dans la composition polymère dans une proportion allant jusqu'à 65 % en poids, de manière préférée entre 3 % en poids et 65 % en poids, de manière plus préférée entre 3 % en poids et 50 % en poids, de manière encore plus préférée entre 3 % en poids et 30 % en poids, de manière la plus préférée entre 5 % en poids et 30 % en poids.

3. Fermeture de récipient selon l'une des revendications précédentes, dans laquelle la seconde polyoléfine a une dureté Shore A, déterminée selon la norme DIN ISO 7619-1 à 23 °C, d'au plus 90, en particulier comprise entre 30 et 90.

4. Fermeture de récipient selon l'une des revendications précédentes, dans laquelle la composition polymère comprend un troisième polymère, dans laquelle le troisième polymère a une dureté Shore D, déterminée selon la norme DIN ISO 7619-1 à 23 °C, d'au plus 60, en particulier comprise entre 20 et 60.

5. Fermeture de récipient selon la revendication 4, dans laquelle le troisième polymère est un homopolymère et l'homopolymère est composé d'une (alpha)-oléfine en C₂ à C ₁₂, de manière préférée d'une (alpha)-oléfine en C₂ à C₈, de manière particulièrement préférée d'une (alpha)-oléfine en C₂ à C₆.

6. Fermeture de récipient selon la revendication 4, dans laquelle le troisième polymère est un copolymère et le copolymère comprend au moins une ou au moins deux (alpha)-oléfines en C ₂ à C ₁₂ en tant que comonomères, de manière préférée au moins une ou au moins deux (alpha)-oléfines en C₂ à C₈ en tant que comonomères, de manière particulièrement préférée au moins une ou au moins deux (alpha)-oléfines en C ₂ à C₆ en tant que comonomères.

7. Fermeture de récipient selon l'une des revendications précédentes, dans laquelle la composition polymère comprend un quatrième polymère, dans laquelle le quatrième polymère est présent dans une proportion d'au plus 35 % en poids, de manière préférée entre 5 % en poids et 35 % en poids, de manière particulièrement préférée entre 5 % en poids et 27 % en poids, de manière encore plus préférée entre 5 % en poids et 18 % en poids, de manière la plus préférée entre 11 % en poids et 18 % en poids.

8. Fermeture de récipient selon la revendication 7, dans laquelle le quatrième polymère est un homopolymère et l'homopolymère est composé d'une (alpha)-oléfine en C₂ à C ₁₂, de manière préférée d'une (alpha)-oléfine en C₂ à C₈, de manière particulièrement préférée d'une (alpha)-oléfine en C₂ à C₆.

9. Fermeture de récipient selon la revendication 7, dans laquelle le quatrième polymère est un copolymère et le copolymère comprend au moins une ou au moins deux (alpha)-oléfines en C ₂ à C ₁₂ en tant que comonomères, de manière préférée au moins une ou au moins deux (alpha)-oléfines en C₂ à C₈ en tant que comonomères, de manière particulièrement préférée au moins une ou au moins deux (alpha)-oléfines en C₂ à C₆ en tant que comonomères.

10. Fermeture de récipient selon l'une des revendications précédentes, dans laquelle la composition polymère a un taux de perméabilité à l'oxygène, déterminé selon la norme DIN 53380, inférieur à 1300 cm³ m⁻² d⁻¹bar⁻¹, de préférence inférieur à 900 cm³ m⁻² d⁻¹bar⁻¹, de manière plus préférée inférieur à 750 cm³ m⁻² d⁻¹bar⁻¹.

11. Récipient (5, 25, 45) ayant une embouchure de récipient (5a, 25a, 45a) et une ouverture pouvant être fermée à l'extrémité de l'embouchure de récipient, dans lequel l'ouverture est fermée par une fermeture de récipient (1, 21, 41, 61) selon l'une des revendications précédentes.

12. Récipient selon la revendication 11, dans lequel la fermeture de récipient comprend un support (11, 31, 51, 71) et l'élément d'étanchéité (3, 23, 43, 63), et dans lequel l'élément d'étanchéité présente, entre une extrémité supérieure (4, 24, 44) de l'embouchure du récipient et un côté inférieur du support (11, 31, 51, 71), une hauteur (h3) de 1,0 mm maximum, de manière préférée de 0,8 mm maximum, de manière particulièrement préférée de 0,7 mm maximum, dans une direction axiale du récipient ; et/ou dans lequel la fermeture de récipient comprend un support (11, 31, 51, 71) et l'élément d'étanchéité (3, 23, 43, 63), et dans lequel l'élément d'étanchéité présente, entre une extrémité supérieure (4, 24, 44) de l'embouchure de récipient et un côté inférieur du support (11, 31, 51, 71), une hauteur (h3) d'au moins 0,2 mm, de manière préférée d'au moins 0,4 mm, de manière particulièrement préférée d'au moins 0,5 mm, dans une direction axiale du récipient.

13. Procédé de fabrication d'un récipient fermé et rempli, comportant les étapes consistant à :
(a) fournir un récipient (1, 21, 41, 61) ayant une embouchure de récipient (5a, 25a, 45a) et une ouverture pouvant être fermée à l'extrémité de l'embouchure de récipient ;
(b) remplir le récipient d'une denrée alimentaire par l'ouverture du récipient ;
(c) fermer l'ouverture du récipient avec une fermeture de récipient selon l'une des revendications 1 à 10.

14. Procédé selon la revendication 13, dans lequel la fermeture de récipient est traitée à une température d'au moins 90 °C, avant que l'ouverture du récipient soit fermée avec la fermeture de récipient.

15. Procédé selon l'une des revendications 13 ou 14, dans lequel la pression absolue dans le récipient fermé et rempli est de 200 hPa maximum, de préférence de 100 hPa maximum.
